# EUROPEAN PATENT APPLICATION

(11) **EP 4 391 181 A1**
(43) Date of publication of application: **26.06.2024**
(21) Application number: 22858202.9
(22) Date of filing: 08.07.2022
(51) Int. Cl.: H01M 50/291, H01M 50/293

(54) **BATTERY CUSHIONING MATERIAL**

(30) Priority: 17.08.2021 JP 2021132676
(71) Applicant: NOK Corporation, Tokyo 105-8585 (JP)
(72) Inventor: XU Fangman, Tsujido-shinmachi, Fujisawa-shi, Kanagawa 251- 0042 (JP); OYAMA Takayuki, Tsujido-shinmachi, Fujisawa-shi, Kanagawa 251- 0042 (JP); MIYAKE Ryo, Tsujido-shinmachi, Fujisawa-shi, Kanagawa 251- 0042 (JP)
(74) Representative: TBK
(86) International application number: PCT/JP2022/027058
(87) International publication number: WO 2023/021879

(57) **Abstract**

A battery buffering material which prevents a reaction force from increasing suddenly even when the compression ratio is large, and maintains its heat insulating performance is provided. A battery buffering material 100 is a buffering material disposed between adjacent members which constitute a battery, includes a sheet-like structure made of an elastic material, and front surface protruding portions 21 extending on the side of a front surface 11 thereof and the back surface protruding portions 22 extending on the side of a back surface 13 thereof, wherein the front surface protruding portions and the back surface protruding portions have a hollow conical shape or a hollow spherical segment shape, and the front surface protruding portions 21 and the back surface protruding portions 22 collapse when an external force due to expansion of the members is applied to the battery buffering material.

## Description

### Technical Field

The present invention relates to a battery buffering material. More specifically, the present invention relates to a battery buffering material used in a battery such as a secondary battery used in an electric vehicle or the like.

### Description of the Related Art

Conventionally, a battery (secondary battery) is widely used as an energy source of an electric vehicle or the like. The battery includes a plurality of battery cells, a buffering material (a battery buffering material), and the like. As a configuration of the battery cell, there is known a configuration which has an electrode assembly that is formed by laminating a positive electrode, a negative electrode, and a separator, and accommodates the electrode assembly in a housing case thereof.

The battery includes a restraining portion that laminates a plurality of the housing cases and restrains the housing cases in the laminating direction. The restraining portion is disposed outside of the the housing cases to restrain the housing cases from the outside.

Such a battery expands or contracts due to heat generated during charge and discharge while the housing cases are restrained by the restraint portion.

The electrodes are loaded due to the expansion associated with the charge and discharge. Therefore, a buffering material (a battery buffering material) is used to prevent the electrode from being damaged or the like due to this load (for example, refer to Patent Document 1). In addition, the buffering material is effectively used not only for the expansion associated with charge and discharge as described above, but also for reducing impact when a battery is vibrated or the like.

Further, since there is a concern that thermal runaway may occur due to an increase in the battery temperature, the buffering material is also used as a heat insulating material that exhibits heat insulating properties.

### Citation List

### Patent Document

[Patent Document 1] JP 2020-4556A

### SUMMARY OF THE INVENTION

### Problem to be solved by the Invention

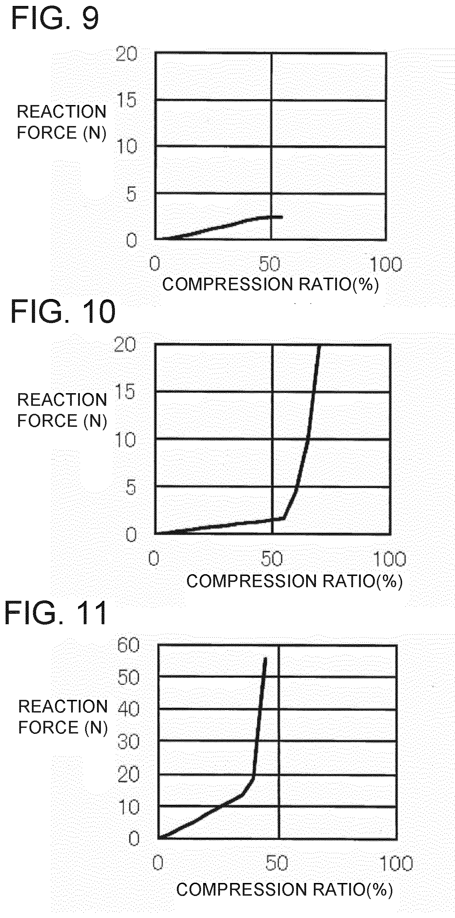

However, there is still room for further improvement in a buffering material such as a buffering sheet of Patent Document 1. Specifically, in the buffering material such as the buffering sheet of Patent Document 1, a large reaction force tends to be generated as the compression ratio due to an external force such as a load increases, and in particular, when the compression ratio exceeds a predetermined value, the large reaction force tends to be generated suddenly (see FIG. 11). When such a large reaction force (particularly, a sudden large reaction force) is generated, the large force is likely to be applied to an object to be buffered (for example, a battery cell, a storage case thereof, or the like). That is, there is still room for improvement in the conventional buffering material to suppress a sudden increase of the reaction force so that a large reaction force is hardly generated even when the compression ratio is increased by receiving a large external force,

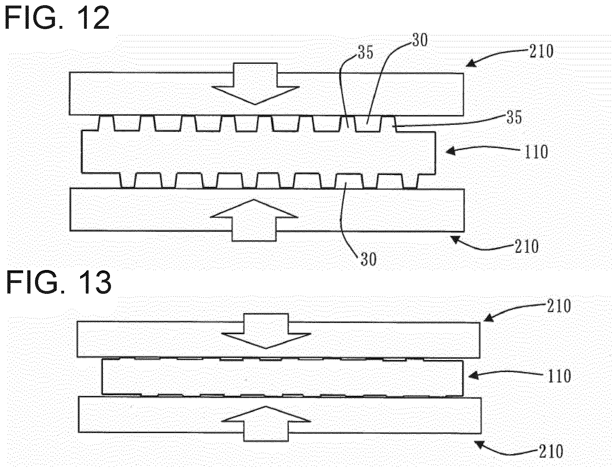

Further, in a buffering material such as a buffering sheet of Patent Document 1, when the compression ratio due to an external force such as a load increases, there is a tendency that the air layer hardly remains as shown in FIG. 13. Therefore, there is a concern that the heat insulating effect by the air layer is not sufficiently exhibited.

The present invention has been made in view of such prior art, and an object thereof is to develop a battery buffering material in which a reaction force hardly increases suddenly even when the compression ratio is large, and further, its heat insulating performance is maintained.

### Means for Solving the Problems

According to the present invention, the following battery buffering material is provided.
[1] A battery buffering material that is a buffering material disposed between adjacent members which constitute a battery, comprising:
   a sheet-like structure made of an elastic material, and
   front surface protruding portions extending on the side of a front surface thereof and back surface protruding portions extending on the side of a back surface thereof, wherein
   the front surface protruding portions and the back surface protruding portions have a hollow conical shape or a hollow spherical segment shape, and
   the front surface protruding portions and the back surface protruding portions collapse when an external force due to expansion of the members is applied to the battery buffering material.
[2] The battery buffering material according to [1], wherein the front surface protruding portions and the back surface protruding portions are alternately arranged in a grid pattern in a plan view.
[3] The battery buffering material according to [1] or [2], wherein the front surface protruding portions and the back surface protruding portions have a truncated circular conical shape or a hemispherical shape.
[4] The battery buffering material according to any one of [1] to [3], wherein a thickness H of the battery buffering material and a thickness T3 of the sheet-like structure satisfy a relation of H>3×T3.
[5] The battery buffering material according to any one of [1] to [4], wherein the front surface protruding portions and the back surface protruding portions have openings at bottoms thereof.
[6] The battery buffering material according to any one of [1] to [5], wherein a height of the front surface protruding portions is equal to a height of the back surface protruding portions.

### Effect of the Invention

The battery buffering material according to the present invention has hollow protruding portions protruding on both a front surface thereof and a back surface thereof, and therefore, the reaction force is hardly increased even when the compression ratio is large, and in addition, its heat insulating performance is maintained since an air layer is secured.

### BRIEF DESCRIPTION OF THE DRAWINGS

FIG. 1 is a cross-sectional view schematically showing a use state of an embodiment of a battery buffering material according to the present invention.
FIG. 2 is a cross-sectional view schematically showing another use state of the embodiment of a battery buffering material according to the present invention.
FIG. 3 is a perspective view schematically showing the embodiment of a battery buffering material according to the present invention.
FIG. 4 is a partial plan view schematically showing a part of the embodiment of a battery buffering material according to the present invention.
FIG. 5 is an explanatory view showing a state of the battery buffering material shown in FIG. 4 when the battery buffering material receives an external force.
FIG. 6 is a perspective view schematically showing another embodiment of a battery buffering material according to the present invention.
FIG. 7 is a perspective view schematically showing a part of another embodiment of a battery buffering material according to the present invention.
FIG. 8 is an explanatory view showing a state of the battery buffering material shown in FIG. 7 when the battery buffering material receives an external force.
FIG. 9 is a graph showing the relation between the compression ratio and the reaction force of the battery buffering material of Example 1.
FIG. 10 is a graph showing the relation between the compression ratio and the reaction force of the battery buffering material of Example 2.
FIG. 11 is a graph showing the relation between the compression ratio and the reaction force of the battery buffering material of Comparative Example 1.
FIG. 12 is an explanatory view schematically showing a use state of an embodiment of a conventional buffering material.
FIG. 13 is an explanatory view schematically showing a use state of an embodiment of a conventional buffering material.

### Mode for carrying out the invention

Embodiment according to the present invention will be described below referring to the drawings. It should be understood that the present invention is not limited to the following embodiment, and modifications, improvements, and the like can be made as appropriate based on ordinary knowledge of a person skilled in the art without departing from the spirit of the present invention.

### (1) Battery buffering material

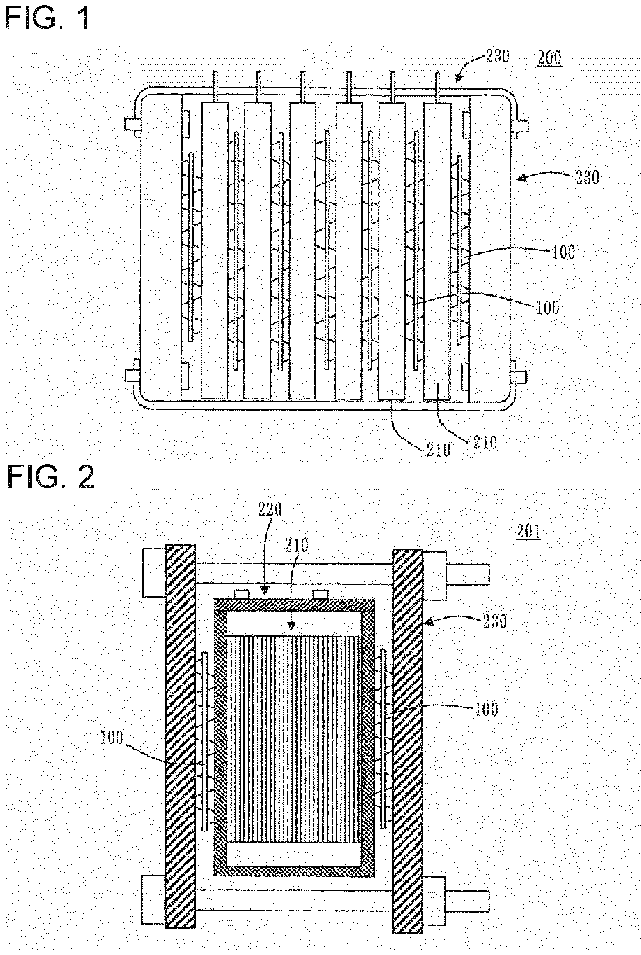

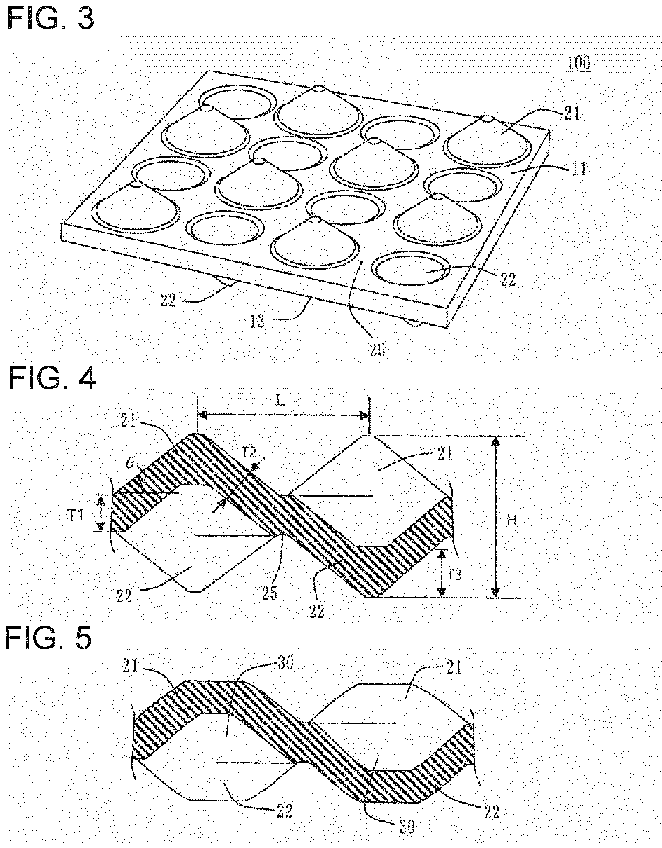

An embodiment of the battery buffering material according to the present invention is a battery buffering material 100 shown in FIGS. 3 and 4. The battery buffering material 100 is a buffering material disposed between adjacent members (for example, the adjacent battery cells 210 (see FIG. 1), or the storage case 220 and the restraining portion 230 (see FIG. 2)) among the members constituting the batteries 200 and 201 (see FIGS. 1 and 2). The battery buffering material 100 has a sheet-like structure made of an elastic material, and has front surface protruding portions 21 extending on a front surface 11 thereof and the back surface protruding portions 22 extending on the side of a back surface 13 thereof. The front surface protruding portions 21 and the back surface protruding portions 22 have a hollow conical shape or a hollow spherical segment shape. The front surface protruding portions 21 and the back surface protruding portions 22 collapse (see FIG. 5) when an external force due to expansion of members such as the battery cells 210 is applied to the battery buffering material.

When the buffering material 100 as described above is subjected to an external force due to expansion of members such as the battery cells 210 in a thickness direction, the buffering material 100 elastically deforms so as to absorb the external force, and thereafter, the front surface protruding portions 21 and the back surface protruding portions 22 collapse (see FIG. 5). The collapse of the hollow front surface protruding portions 21 and the hollow back surface protruding portions 22 makes it difficult for the reaction force to suddenly increase even when the compression ratio is large (see, for example, FIG. 10). Further, the front surface protruding portions 21 and the back surface protruding portions 22 are not completely collapsed even when the amount of compression is large, and thus their air layers 30 are secured, so that the thermal insulation performance is maintained.

In the present description, "the front surface protruding portions and the back surface protruding portions 22 collapse" means that the apex parts of the surface protruding portion and the back surface side deform to such an extent that the thermal insulation performance by the air layers is maintained (e.g., such that about 50% of the volume of the interior that is hollow remains).

The battery buffering material 100 can be disposed between adjacent battery cells 210 among the plurality of battery cells 210 that are members constituting the battery 200, such as the battery 200 illustrated in FIG. 1. In addition, the battery buffering material 100 can be disposed between the battery cell 210 and the restraining portion 230, which are members constituting the battery 201, as in the battery 201 shown in FIG. 2.

Here, a battery such as a lithium-ion battery includes a plurality of battery cells, and these battery cells perform expansion and contraction at the time of charge and discharge, respectively. There is a concern that repeat of changes in the volume due to the expansion and the contraction induces crushing of the electrode particles, which is likely to shorten the life of the battery.

In addition, when a part of the battery cells inside the battery accidentally generate heat, the heat generation causes heat generation of another battery cell, and as a result, an increase in the battery temperature continues, and there is also a concern that thermal runaway of the battery cells occurs to cause a fire.

For these reasons, in order to suppress expansion of the battery cells during normal use or to secure heat insulation performance (i.e., to prevent, when a thermal runaway of a battery cell occurs, heat generation of another battery cell), it is known as a common method to install a solid elastic body (i.e., a buffering material) having a thermal resistance between adjacent battery cells.

The elastic body is compressed by the expansion of the battery cells to reduce its volume. In particular, when a thermal runaway of the battery cells occurs to induce a large expansion, the volume of the elastic body is greatly reduced. At this time, there is a concern that the reaction force generated from the elastic body increases suddenly and the battery cells are damaged. Here, as shown in FIG. 11, when the rubber as the main material of the elastic body is compressed, the increase of the reaction force is small when the compression ratio is small. However, when the compression ratio exceeds a predetermined value, the reaction force tends to increase suddenly. The conventional elastic body (see FIG. 12) has a small compression ratio at which the reaction force starts to increase suddenly, and there is a tendency that the reaction force increases suddenly at a relatively small compression ratio.

Further, as in the elastic body 110 shown in FIG. 12, by forming the plurality of protrusions 35, the air layer 30 can be formed between the adjacent battery cells 210 while reducing the contact area between the elastic body 110 and the battery cells 210. The air layer 30 ensures heat insulation between adjacent battery cells 210. However, in a buffering material such as the elastic body 110 shown in FIG. 12, when compressed, the protruding portion 35 is crushed (see FIG. 13), so that the volume of the air layer 30 becomes too small or the air layer 30 disappears. As a result, there is a concern that sufficient heat insulation is not exhibited. When the protrusion 35 is made hard to collapse when compressed (for example, hardened), the air layer 30 is easily secured, but the reaction force tends to suddenly increase even at a stage where the compression ratio is small.

In the battery buffering material according to the present invention, since the hollow front surface protruding portions 21 and the hollow back surface protruding portions 22 are crushed by a predetermined external force, the reaction force is unlikely to increase suddenly even when the compression ratio is large (see, for example, FIG. 10). In addition, since the front surface protruding portions 21 and the back surface protruding portions 22 are not completely collapsed even when the amount of compression is large, the air layers 30 are secured and its heat insulating performance is maintained.

The battery buffering material 100 is made of an elastic material. The elastic material is not particularly limited, but specifically is a rubber material, and more specifically, flame-resistant rubber, non-flammable rubber, self-extinguishing rubber, and the like can be exemplified.

A hardness of the battery buffering material 100 made of an elastic material is not particularly limited, but may be 50 to 90 degrees, and may be 60 to 80 degrees, as measured by JIS K 6253 durometer type E. Within such a range, when an external force is applied in the thickness direction, a sudden increase of the reaction force can be favorably suppressed.

The battery buffering material 100 has a sheet-like structure, and the specific shape thereof is not particularly limited. The thickness H (refer to FIG. 4) can be appropriately set in consideration of the arrangement space of the battery buffering material 100 and the like. It can be said that the battery buffering material according to the present invention is formed by forming depressions each having an opening on the side of one surface (the front surface 11) and depressions each having an opening on the side of the other surface (the back surface 13) in a flat elastic material. Here, these depressions correspond to the hollow front surface protruding portions and the hollow back surface protruding portions. That is, it can be said that the front surface protruding portions and the back surface protruding portions have openings at bottoms thereof so that the bottoms are opened.

A thickness T1 (see FIG. 4) of the battery buffering material 100, which has a sheet-like structure, is not particularly limited and can be appropriately set, but can be, for example, about 0.1~10mm.

In the present invention, a thickness H of the battery buffering material and a thickness T3 of the sheet-like structure preferably satisfy the relationship of H>3×T3, and more preferably satisfies the relationship of 4×T3>H>3×T3. When such a relationship is satisfied, a sudden increase of the reaction force can be suppressed more favorably.

The size of the battery buffering material 100 is not particularly limited and can be set as appropriate, and when the battery buffering material 100 is adjacent to the battery cells 210, it can be the same size as the battery cells 210 or can be made slightly smaller than the battery cells 210.

### (1-1) Protruding portions:

The battery buffering material 100 has front surface protruding portions 21 extending on a front surface 11 thereof and the back surface protruding portions 22 extending on the side of a back surface 13 thereof, and the front surface protruding portions 21 and the back surface protruding portions 22 have a hollow conical shape or a hollow spherical segment shape. The front surface protruding portions 21 and the back surface protruding portions 22 collapse when an external force due to expansion of members such as the battery cells 210 is applied to the battery buffering material 100 in the thickness direction. Here, in the battery, the range of the load applied to the battery buffering material. due to the thermal expansion can be estimated in advance, and the timings at which the front surface protruding portions 21 and the back surface protruding portions 22 should collapse can be set in advance. Further, the magnitude of the external force generated when thermally runaway of the battery cells 210 occurs can also be estimated, and it can be set so that the reaction force does not increase suddenly under the compression ratio caused by the external force.

the front surface protruding portions 21 and the back surface protruding portions 22 have a hollow conical shape or a hollow spherical segment shape. These shapes make it possible to make the front surface protruding portions 21 and the back surface protruding portions 22 come into point contact with the battery cell 210 or the like, so that the contact area can be reduced. As a result, the amount of heat transferred from the contact surface with the battery cells or the like can be reduced.

In the present description, the cone shape is a concept including a top-truncated cone shape, and specific examples of the cone shape include a circular cone shape, a top-truncated circular cone shape (that is, a truncated circular cone shape), a pyramid shape, a top-truncated pyramid shape (that is, a truncated pyramid shape), and the like.

The spherical shape means a three-dimensional shape obtained by cutting a sphere by one plane, and specifically, a hemispherical shape or the like can be exemplified.

Specifically, the front surface protruding portions 21 and the back surface protruding portions 22 may have a truncated circular conical shape or a hemispherical shape.

FIG. 3 shows a battery buffering material 100 in which the front surface protruding portions 21 and the back surface protruding portions 22 have a truncated circular conical shape. According to the battery buffering material 100, the contact area where the front surface protruding portions 21 and the back surface protruding portions 22 come into contact with the battery cells 210 and the like is reduced, and the amount of heat transferred from the contact surface with the battery cells and the like can be reduced. In addition, according to the battery buffering material 100, it is possible to better prevent sudden increase of the reaction force caused by decrease of its volume due to the compression.

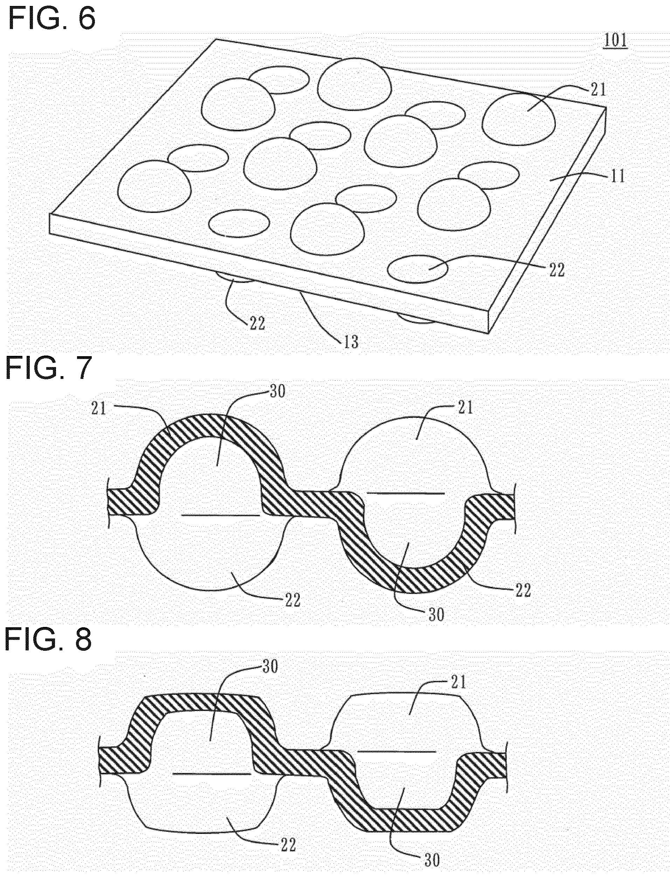

FIG. 6 shows a battery buffering material 101 in which the front surface protruding portions 21 and the back surface protruding portions 22 have a hemispherical shape. According to the battery buffering material 101, the contact area where the front surface protruding portions 21 and the back surface protruding portions 22 come into contact with the battery cell 210 and the like is reduced, and the amount of heat transferred from the contact surface with the battery cell and the like can be reduced. In addition, according to the battery buffering material 101, it is possible to better prevent sudden increase of the reaction force caused by decrease of its volume due to the compression.

The front surface protruding portions 21 and the back surface protruding portions 22 have a hollow shape, i.e., have a space formed therein. In this way, even if the compression ratio is large (for example, the compression ratio is 50%), the volume can be prevented from decreasing due to the deformation of the front surface protruding portions 21 and the back surface protruding portions 22. Therefore, it is possible to prevent a sudden increase of the reaction force caused by decrease of the volume due to compression.

At least one of the front surface protruding portions 21 and the back surface protruding portions 22 may be formed, but a plurality thereof may be formed. The number thereof is not particularly limited, and can be appropriately set in consideration of the magnitude of the reaction force and the like.

The positions at which the front surface protruding portions 21 and the back surface protruding portions 22 are formed are not particularly limited and can be appropriately set. For example, as shown in FIG. 3, the front surface protruding portions 21 and the back surface protruding portions 22 may be formed so as to be alternately arranged in a grid pattern (block-check) in a plan view (specifically, when the front surface 11 of the battery buffering material 100, which is a sheet-like structure, is viewed perpendicularly to the front surface 11). When formed in this manner, the reaction force is uniformly generated on the side of the front surface 11 and on the side of the back surface 13, and it is possible to prevent positional deviation or the like from occurring in the adjacent battery cells 210.

The distance L between the front surface protruding portions 21 and the distance L between the back surface protruding portions 22 can be appropriately set in view of the magnitude of the generated reaction force and the like. This distance L is the distance between the apex parts of the front surface protruding portions 21 and the back surface protruding portions 22 (see FIG. 4).

A respective thickness T2 (see FIG. 4) of the front surface protruding portions 21 and the back surface protruding portions 22 is not particularly limited and can be appropriately set. For example, the respective thickness may be about 0.1~10 mm.

The front surface protruding portions 21 and the back surface protruding portions 22 may have the same shape and size, or may have different shapes, sizes, and the like. That is, for example, the front surface protruding portions 21 may have a hollow cone shape, and the back surface protruding portions 22 may have a hollow spherical shape. As shown in FIGS. 3 and 4, both the front surface protruding portions 21 and the back surface protruding portions 22 may have a hollow cone shape (truncated cone shape). As shown in FIGS. 6 and 7, both the front surface protruding portions 21 and the back surface protruding portions 22 may have a hollow spherical shape (hemispherical shape). A height of the front surface protruding portions 21 may be the same as or different from a height of the back surface protruding portions 22, but is preferably the same height.

When the front surface protruding portions 21 and the back surface protruding portions 22 have a cone shape, the angle θ (see FIG. 4) formed by the side surface thereof is not particularly limited and can be appropriately set.

In this way, the thickness and the respective distances of the front surface protruding portions 21 and the back surface protruding portions 22 can be appropriately adjusted, and in the case of a cone shape, the angle θ formed by the side surface and the thickness T3 of the apex part can be appropriately adjusted so that a desired reaction force is generated when an external force is received. Further, the thickness T2 of the front surface protruding portions 21 and the back surface protruding portions 22, and a thickness of a flat portion 25 other than these (the thickness T1 of the battery buffering material 100) may be the same or different, and these may be appropriately set so as to generate a desired reaction force. The densities of the front surface protruding portions 21 and the back surface protruding portions 22 can be appropriately determined, and can be about 1 to 6 pieces/cm².

### (2) Use of battery buffering material according to present invention

The battery buffering material 100 may be disposed between adjacent battery cells 210 as in the battery 200 shown in FIG. 1, or may be disposed between laminated body including the plurality of battery cells 210 and the restraining portion 230 as in the battery 201 shown in FIG. 2. Note that the number of the battery buffering materials 100 is not limited to one, and a plurality of the buffering materials may be used. The battery is not limited to an all-solid-state battery, and may be a liquid electrolyte battery.

With this arrangement, the battery buffering material 100 absorbs an expansion force generated at the time of expansion of the battery cells (battery), and functions as a buffering material when the battery receives an impact from an external force. Further, by using the battery buffering material 100, the degree of volume reduction of the air layers 30 (see FIG. 5) existing between the adjacent battery cells 210 and between the battery cells 210 and the restraining portion 230 is small, and its heat insulating performance is maintained.

More specifically, when the battery 200 thermally expands, the battery buffering material 100 is deformed so that its thickness H (see FIG. 4) becomes thinner and absorbs the external force. At this time, the front surface protruding portions 21 and the back surface protruding portions 22 collapse, and a reaction force is generated from the battery buffering material 100, thereby balancing the force with the external force. Further, while the front surface protruding portions 21 and the back surface protruding portions 22 generate a reaction force like a spring, a sudden increase of the reaction force is suppressed even if the compression ratio is increased. Further, the front surface protruding portions 21 and the back surface protruding portions 22 are not completely collapsed, and the air layers remain inside, so that the thermal insulation performance is maintained.

In the case where the battery buffering material according to the present invention is disposed between the adjacent battery cells 210 or between the restraining portion 230 and the battery cells 210, only one battery buffering material may be used, or a plurality of battery buffering materials may be used. When a plurality of sheets are used, a plurality of battery buffering materials may be used in a laminated manner, or may be used in a manner arranged in parallel in a planar shape.

### [Example]

Hereinafter, the present invention will be described in detail based on Examples, but the present invention is not limited to these Examples.

### (Example 1)

Assuming a battery buffering material as shown in FIG. 3, the compression ratio (%) and the reaction force (N) were analyzed by simulation. The material to be analyzed was ethylene propylene diene rubber (the hardness was 75 degrees of JIS K 6253 durometer type E). Analyses were performed in such a manner that the shapes of the front surface protruding portions and the back surface protruding portions has a hollow truncated circular conical shape, and the front surface protruding portions and the back surface protruding portions were alternately arranged in a grid pattern in a plan view (i.e., when the surface of the battery buffering material was viewed from a direction perpendicular to the surface), and the density of protruding portions (front surface protruding portions and the back surface protruding portions) was 4 pieces/cm².

The analysis was performed using a MARC manufactured by MSC. The analyzed results are shown in Figure 9.

As shown in FIG. 9, it was found that the battery buffering material assumed in Example 1 suppressed the sudden increase of the reaction force even when the compression ratio was large (about 50%). That is, it has been found that the compression ratio at which the reaction force suddenly increases is delayed.

Further, it can be seen that the degree of volume reduction of the air layers existing between the adjacent battery cells or between the battery cells and the restraint portion is small, and its heat insulating performance is maintained.

### (Example 2)

Assuming a battery buffering material as shown in FIG. 6, the compression ratio (%) and the reaction force (N) were analyzed by simulation. The analysis was performed in the same manner as in Example 1 except that the shapes of the front surface protruding portions and the back surface protruding portions were assumed to have a hollow hemispherical shape.

As in Example 1, a MARC manufactured by MSC was used for the analysis. The analyzed results are shown in Figure 10.

As shown in FIG. 10, it was found that, as in the case of Example 1, the battery buffering material assumed in Example 2 suppressed the sudden increase of the reaction force even when the compression ratio is large (about 50%). In addition, it can be seen that the degree of volume reduction of the air layers is small, and its heat insulating performance is maintained.

### (Comparative Example 1)

The relation between the compression ratio (%) and the reaction force (N) was simulated in the same manner as in Example 1, except that a battery buffering material as shown in FIG. 12 was assumed.

As shown in FIG. 11, in the battery buffering material of Comparative Example 1, the increase of the reaction force was significantly large as compared with the increase of the compression ratio when the compression ratio of the battery buffering material was large (for example, about 40%). In addition, as shown in FIG. 13, it can be seen that almost no air layer remains, and its heat insulating performance is not sufficiently exhibited.

As can be seen from Examples 1 and 2, and Comparative Example 1 described above, the battery buffering materials of Examples 1 and 2 suppress the sudden increase of the reaction force even when the compression ratio is large. Therefore, even if the battery thermally expands due to thermal runaway or the buffering material is largely compressed due to external impact, a sudden increase of a reaction force is suppressed and a large reaction force is hardly generated. As a result, it is possible to prevent the battery from being damaged or the like due to the reaction force generated from the battery buffering material. In addition, the battery buffering materials of Example 1 and 2 have a small degree of volume reduction of the air layers existing between the adjacent battery cells and the like, and its heat insulating performance is maintained.

### Industrial Applicability

The battery buffering material according to the present invention can be employed as a battery buffering material such as a lithium battery used in an electric vehicle or the like.

### Description of Symbols

11: Front surface,
13: Back surface,
21: Front surface protruding portion,
22: Back surface protruding portion,
25: Flat portion,
30: Air layer,
35: Protrusion,
100, 101: Battery buffering material,
110: Elastic body,
200,201: Battery,
210: Battery cell,
220: Storage case,
230: Restraining portion.

## Claims

1. A battery buffering material that is a buffering material disposed between adjacent members which constitute a battery, comprising:
a sheet-like structure made of an elastic material, and
front surface protruding portions extending on the side of a front surface thereof and back surface protruding portions extending on the side of a back surface thereof, wherein
the front surface protruding portions and the back surface protruding portions have a hollow conical shape or a hollow spherical segment shape, and
the front surface protruding portions and the back surface protruding portions collapse when an external force due to expansion of the members is applied to the battery buffering material.

2. The battery buffering material according to claim 1, wherein the front surface protruding portions and the back surface protruding portions are alternately arranged in a grid pattern in a plan view.

3. The battery buffering material according to claim 1 or 2, wherein the front surface protruding portions and the back surface protruding portions have a truncated circular conical shape or a hemispherical shape.

4. The battery buffering material according to any one of claims 1 to 3, wherein a thickness H of the battery buffering material and a thickness T3 of the sheet-like structure satisfy a relation of H>3 ×T3.

5. The battery buffering material according to any one of claims 1 to 4, wherein the front surface protruding portions and the back surface protruding portions have openings at bottoms thereof.

6. The battery buffering material according to any one of claims 1 to 5, wherein a height of the front surface protruding portions is equal to a height of the back surface protruding portions.
